Europäisches Patentamt

European Patent Office

Office européen des brevets

(19)

(11) Veröffentlichungsnummer: **0 205 932**
**B1**

(12) **EUROPÄISCHE PATENTSCHRIFT**

(45) Veröffentlichungstag der Patentschrift:
15.11.89

(21) Anmeldenummer: 86106927.6

(22) Anmeldetag: 22.05.86

(51) Int. Cl.⁴: **C08G 77/38**, C07F 7/12,
C07F 7/18

(54) **Verfahren zur Herstellung von Acetoxysiloxanen oder Organo(poly)-siloxanen mit an Silicium direkt gebundenem Halogen.**

(30) Priorität: 23.05.85 DE 3518605

(43) Veröffentlichungstag der Anmeldung:
30.12.86 Patentblatt 86/52

(45) Bekanntmachung des Hinweises auf die Patenterteilung:
15.11.89 Patentblatt 89/46

(84) Benannte Vertragsstaaten:
AT BE CH DE FR GB IT LI NL

(56) Entgegenhaltungen:
BE-A- 714 441
DE-A- 1 058 476
US-A- 2 598 436
US-A- 3 664 985

R.J.H. VOORHOEVE: "Organohalosilanes Precursors to Silicones", 1967, Seiten 40-43,56-59, Elsevier Publishing Co., Amsterdam, NL

(73) Patentinhaber: WACKER-CHEMIE GMBH,
Prinzregentenstrasse 22, D-8000 München 22(DE)

(72) Erfinder: Müller, Johann, Friedrich-Ebert-Strasse 3,
D-8263 Burghausen(DE)
Erfinder: Trieschmann, Christa, Dr. Dipl.-Chem.,
Stadtplatz 95/96, D-8263 Burghausen(DE)
Erfinder: Doskocil, Walter, Wacker-Strasse 56,
D-8263 Burghausen(DE)
Erfinder: Preiner, Gerhard, Dr. Dipl.-Chem.,
Karl-Gross-Strasse 17, D-8263 Burghausen(DE)

ACTORUM AG

## Beschreibung

Es ist bereits bekannt, z.B. Tris-trimethylsiloxy)-acetoxysilan herzustellen (vgl. CA 11 57 876, ausgegeben 29. November 1983, Erf.: N.N. Novicky, Anm.: G.F. Tsuetaki).

Es ist weiterhin bekannt, Organo(poly)siloxane mit an Silicium direkt gebundenem Halogen, nämlich Chlor, durch Umsetzung von direkt an Silicium gebundenen Wasserstoff, aufweisendem Organo(poly)siloxan mit beta-Methallylchlorid in Gegenwart von metallischem Palladium oder Ruthenium herzustellen. Hierzu wird auf Th.A. Barry et al. in Journal of Organic Chemistry, Vol. 38, Seite 838 bis 841, verwiesen.

Es ist Aufgabe der Erfindung, ein Verfahren zur Herstellung von Organo(poly)siloxanen mit an Silicium direkt gebundenem Halogen durch Umsetzung von direkt an Silicium gebundenen Wasserstoff aufweisendem Organo(poly)siloxan mit einer Allylverbindung in Gegenwart von z.B. metallischem Palladium oder Ruthenium bereitzustellen, wobei mit besonders wenig Katalysator innerhalb besonders kurzer Zeit besonders hohe Ausbeuten erzielt werden, oder ein besonders wenig aufwendiges Verfahren zur Herstellung von Acetoxysiloxanen bereitzustellen, bei dem kein korrodierendes Nebenprodukt gebildet wird. Diese Aufgabe wird durch die Erfindung gelöst.

Gegenstand der Erfindung ist ein Verfahren zur Herstellung von Acetoxysiloxanen oder Organo(poly)siloxanen mit an Silicium direkt gebundenem Halogen durch Umsetzung von direkt an Silicium gebundenen Wasserstoff aufweisendem Organo(poly)siloxan mit einer Allylverbindung in Gegenwart von metallischem Palladium, Ruthenium oder Rhodium oder von Acetylaceton- oder Phosphin-Komplex bzw. Acetylaceton- oder Phosphin-Verbindung eines der vorstehend genannten Edelmetalle, dadurch gekennzeichnet, daß als Allylverbindung ein Allylhalogenid mit 3 Kohlenstoffatomen je Molekül bzw. Allylacetat wird.

Es ist bisher nicht bekannt geworden, daß die Reaktionen von direkt an Silicium gebundenem Wasserstoff durch andere Substituenten des Siliciums als Siloxansauerstoffatome beeinflußt werden. Folglich können bei dem erfindungsgemäßen Verfahren beiliebige Organo(poly)siloxane mit direkt an Silicium gebundenem Wasserstoff eingesetzt werden. Bevorzugt als direkt an Silicium gebundenen Wasserstoff aufweisende Organo(poly)siloxane sind jedoch solche der Formeln

$(R_3SiO)_3SiH$,

$[(RHSiO)_m(R_2SiO)_n]$ und

$R_{3-a}H_aSiO(RHSiO)_x(R_2SiO)_ySiH_aR_{3-a}$.

In diesen Formeln bedeutet R jeweils gleiche oder verschiedene, gegebenenfalls halogenierte, einwertige Kohlenwasserstoffreste oder aus Kohlenstoff-, Wasserstoff-, Ethersauerstoff- und Fluoratome(n) aufgebaute, einwertige aliphatische Reste, wobei alle diese Reste R frei von aliphatischen Kohlenstoff-Kohlenstoff-Mehrfachbindungen sind, oder Trialkylsiloxyreste, insbesondere Trimethylsiloxyreste, a ist 0 oder 1, wobei die Werte für a in ein und demselben Molekül verschieden sein können, m ist eine ganze Zahl im Wert von 3 bis 8, n ist eine ganze Zahl im Wert von 0 bis 7, wobei die Summe der Werte von m + n höchstens 8 beträgt, x ist 0 oder eine ganze Zahl im Wert von mindestens 1 mit der Maßgabe, daß mindestens einer der Indices a und x nicht 0 ist und y ist 0 oder eine ganze Zahl im Wert von mindestens 1.

Vorzugsweise ist die Summe der Werte von x + y höchstens so hoch, daß die Viskosität der linearen Organo(poly)siloxane der oben angegebenen Formel höchstens 50 000 mPa.s bei 25°C beträgt.

Vorzugsweise enthalten die Reste R in den oben angegebenen Formeln höchstens 1 bis 18 Kohlenstoffatom(e) je Rest. Beispiele für Kohlenwasserstoffreste R sind Alkylreste wie der Methyl-, Ethyl-, Propyl-, Isopropyl-, Butyl- und sec.-Butylrest sowie Octadecylreste; Cycloalkylreste, wie der Cyclohexylrest und Methylcyclohexylreste; Arylreste, wie der Phenylrest und Diphenylreste; Alkarylreste, wie Tolylreste; und Aralkylreste, wie der Benzylrest.

Beispiele für halogenierte Kohlenwasserstoffreste R sind der 3,3,3-Trifluorpropylrest und o-, p- und m-Chlorphenylreste sowie der beta-Chlorethylrest.

Beispiele für aus Kohlenstoff-, Wasserstoff, Ethersauerstoff- und Fluoratome(n) aufgebaute, einwertige aliphatische Reste R sind der 1,1,2,2,3,3-Hexafluorpropyloxypropylrest und der 1,1,2,2-Tetrafluorethoxypropylrest. Schon wegen der leichteren Zugänglichkeit sind vorzugsweise mindestens 80 % der Anzahl der organischen Reste in den bei dem erfindungsgemäßen Verfahren eingesetzten Organo(poly)siloxanen und damit der Reste R in den oben angegebenen Formeln Methylreste.

Einzelne Beispiele für bei dem erfindungsgemäßen Verfahren einsetzbare, direkt an Silicium gebundenen Wasserstoff aufweisende Organo(poly)-siloxane sind Tris-(trimethylsiloxy)-silan, das wegen des Gehalts an Siloxansauerstoffatomen trotz des Wortteils "silan" ein Organosiloxan ist, 1,1,1,3,3-Pentamethyldisiloxan, 1,1,3,3-Tetramethyldisiloxan, Dimethylhydrogensiloxygruppen als endständige Einheiten aufweisende Dimethylpolysiloxane, das cyclische Organopolysiloxan aus 3 Methylhydrogensiloxaneinheiten und das cyclische Organopolysiloxan aus einer Methylhydrogensiloxaneinheit und 3 Dimethylsiloxaneinheiten sowie durch Trimethylsiloxygruppen endblockierte Methylhydrogenpolysiloxane und durch Trimethylsiloxygruppen endblockierte Mischpolymere aus Methylhydrogensiloxan- und Dimethylsiloxaneinheiten.

Vorzugsweise ist bei Verwendung von metallischem Palladium, Ruthenium oder Rhodium oder Mischungen dieser Elemente als Katalysator das Metall möglichst fein verteilt, wie bei der Verwendung derartiger Katalysatoren allgemein üblich. Das metallische Palladium, Ruthenium oder Rhodium kann sich auf gegenüber derartigen Metallen und den Reaktionsteilnehmern inerten Trägern, wie Aktivkohle, Siliciumdioxyd oder Aluminiumoxyd, befinden.

Einzelne Beispiele für Acetylaceton- oder Phosphin-, insbesondere Triphenylphosphin-Komplexe bzw. Acetylaceton- oder Phosphin-Verbindungen von Palladium, Ruthenium oder Rhodium sind Palladium-diacetylacetonat Chlorotris-(triphenylphosphin)-rhodium I, also die Verbindung bzw. der Komplex der Formel [(C₆H₅)₃P]₃RhCl, der Komplex der Formel Rh (acac)₂ [P(C₆H₅)₃]₂ Rhodiumacetylacetonat Ruthenium-tris-acetylacetonat der Komplex der Formel Ru (acac)₂ [P(C₆H₅)₃]₂ und der Komplex der Formel RuCl₂ [P(C₆H₅)₃]₂ , wobei acac jeweils Acetylacetonat bedeutet.

Bevorzugt sind bei Einsatz eines Allylhalogenids metallisches Palladium auf Aktivkohle, Palladium-diacetylacetonat, Ruthenium-tris-acetylacetonat und der Komplex der Formel [(C₆H₅)₃P]₃RhCl.

Besonders bevorzugt ist bei Einsatz eines Allylhalogenids Palladium auf Aktivkohle.

Bei Einsatz von Allylacetat sind metallisches Palladium auf Aktivkohle, metallisches Ruthenium auf Aktivkohle, die beiden vorstehend genannten Acetylacetonate und der vorstehend genannte Rutheniumkomplex bevorzugt. Besonders bevorzugt bei Einsatz von Allylacetat sind metallisches Palladium auf Aktivkohle und metallisches Ruthenium auf Aktivkohle.

Selbstverständlich können auch Mischungen aus mindestens einem der Elemente Palladium, Ruthenium und Rhodium und mindestens einem einer Verbindung von Acetylaceton oder einem Phosphin, insbesondere Triphenylphosphin, und einem dieser Elemente verwendet werden.

Vorzugsweise werden metallisches Palladium, Ruthenium und Rhodium, sowie Acetylaceton- oder Phosphin-Komplexe bzw. Acetylaceton- oder Phosphin-Verbindungen der vorstehend genannten Edelmetalle in Mengen von 50 bis 1000 Gewichts-ppm (=Teile je Million), berechnet als elementares Metall und bezogen auf das Gesamtgewicht von jeweils eingesetztem direkt an Silicium gebundenen Wasserstoff aufweisendem Organo(poly)siloxan und Allylhalogenid, bzw. Allylacetat verwendet.

Das Halogenid in dem Allylhalogenid oder 3-Halogenpropen-(1) kann Chlor, Brom oder Jod sein. Schon wegen der leichteren Zugänglichkeit ist Chlor bevorzugt.

Vorzugsweise wird Allylhalogenid bzw. Allylacetat in Mengen von 0,5 bis 5 Mol je Grammatom direkt an Silicium gebundenen Wasserstoffs eingesetzt.

Das erfindungsgemäße Verfahren wird vorzugsweise bei 25 bis 200°C und, weil dies den geringsten Aufwand für die dabei verwendeten Vorrichtungen erfordert, beim Druck der umgebenden Atmosphäre, also bei 1020 hPa oder etwa 1020 hPa, durchgeführt. Weil das bei dem erfindungsgemäßen Verfahren ebenfalls entstehende Propylen schon bei Raumtemperatur gasförmig ist, kann auch die Anwendung von geringerem Druck vorteilhaft sein.

Bei der Durchführung der erfindungsgemäßen Verfahrens können die Reaktionsteilnehmer und Katalysator miteinander vermischt und dann auf die gewünschte Temperatur gebracht werden. Wenn das direkt an Silicium gebundenen Wasserstoff aufweisende Organopolysiloxan besonders reaktionsfreudig ist, wie Pentamethyldisiloxan, kann es dem Gemisch aus Katalysator und Allylhalogenid bzw. Allylacetat tropfenweise zugegeben werden oder ein solches Gemisch kann tropfenweise dem Siloxan zugesetzt werden.

Insbesondere bei Verwendung von verhältnismäßig hochviskosen Organopolysiloxanen kann des erfindungsgemäße Verfahren in einem gegenüber den Reaktionsteilnehmern und Katalysator inertem Lösungsmittel, wie Toluol, Tetrahydrofuran oder Dioxan oder einem Gemisch aus mindestens zwei solcher Lösungsmittel, durchgeführt werden.

Lösungsmittel und nicht-umgesetztes Allylhalogenid bzw. nichtumgesetztes Allylacetat können vom erfindungsgemäß hergestellten Organo(poly)siloxan mit an Silicium direkt gebundenem Halogen bzw. Acyloxysiloxan durch Abdampfen, gegebenenfalls unter vermindertem Druck, abgetrennt werden.

Der Katalysator kann vom erfindungsgemäß hergestellten Organo(poly)siloxan mit an Silicium direkt gebundenem Halogen bzw. vom Acyloxysiloxan, falls erwünscht, z.B. durch Filtrieren, abgetrennt werden.

Die erfindungsgemäß hergestellten Organo(poly)siloxane mit an Silicium direkt gebundenem Halogen bzw. Acyloxysiloxane können für alle Zwecke verwendet werden, für die auch bisher Organo(poly)siloxane mit an Silicium direkt gebundenem Halogen bzw. Acyloxysiloxane eingesetzt werden konnten, beispielsweise zur Herstellung von Organo(poly)siloxanen mit organofunktionellen Gruppen und, wenn sie kurzkettig sind, wie Pentamethylchlordisiloxan, zur Einführung von Schutzgruppen in der organischen Chemie. Darüberhinaus können die erfindungsgemäß hergestellten Acyloxysiloxane beispielsweise zur Herstellung von Pfropfpolymerisaten durch Umsetzung mit organischen Polymeren die alkoholische Hydroxylgruppen enthalten, wie einen Polyester mit alkoholischen Hydroxylgruppen, verwendet werden.

Beispiel 1

306 g Allylchlorid werden zu einem auf 50°C erwärmten Gemisch aus 592 g 1,1,1,3,3-Pentamethyldisiloxan und 200 Gewichts-ppm (bezogen auf das Gesamtgewicht des Disiloxans und des Allylhalogenids) Palladium in Form von Palladium auf Aktivkohle (5 Gewichtsprozent Palladium/95 Gewichtsprozent Aktivkohle) unter Rühren des Gemisches tropfenweise gegeben. Dabei steigt die Temperatur auf 96°C. Nach Beendigung der Zugabe des Allylchlorids wird noch 30 Minuten gerührt. Das Reaktionsgemisch enthält dann gemäß ¹H-NMR-Analyse etwa 95 Molprozent (bezogen auf den Siloxanenteil 1,1,1,3,3-Pentamethyl-3-chlordisiloxan. Durch fraktionierte Destillation wird aus diesem Gemisch das gewünschte Chlorsiloxan in einer Reinheit von 99 Gewichtsprozent erhalten.

Beispiel 2

Ein Gemisch aus 38,4 g Allylchlorid, 33,5 g 1,1,3,3-Tetramethyldisiloxan und 200 Gewichts-ppm (bezogen auf das Gesamtgewicht des Disiloxans und des Allylhalogenids) Palladium in Form von Palladiumdiacetylacetonat wird unter Rühren langsam erwärmt. Bei 40°C setzt eine heftige Umsetzung ein, wobei die Temperatur auf 100°C steigt. Nachdem die Umsetzung etwas abgeklungen ist wird noch 15 Minuten gerührt. Das Reaktionsgemisch enthält dann gemäß 1H-NMR-Analyse 84 Molprozent (bezogen auf den Siloxananteil) 1,1,3,3-Tetramethyl-1,3-dichlordisiloxan.

## Beispiel 3

Die in Beispiel 2 beschriebene Arbeitsweise wird wiederholt mit der Abänderung, daß die 200 Gewichts-ppm Palladium durch 200 Gewichts-ppm (bezogen auf das Gesamtgewicht des Disiloxans und des Allylhalogenids) Rhodium in Form des Komplexes der Formel $[(C_6H_5)_3P]_3RhCl$ ersetzt werden. Nachdem die Umsetzung etwas abgeklungen ist und dann noch 15 Minuten gerührt wurde, enthält das Reaktionsgemisch, bezogen auf den Siloxananteil, gemäß 1H-NMR-Analyse 60 Molprozent 1,1,3,3-Tetramethyl-1,3-dichlordisiloxan.

## Beispiel 4

Die in Beispiel 2 beschriebene Arbeitsweise wird wiederholt mit der Abänderung, daß die 200 Gewichts-ppm Palladium durch 200 Gewichts-ppm (bezogen auf das Gesamtgewicht des Disiloxans und des Allylhalogenids Ruthenium in Form von Ruthenium-tris-acetylacetonat ersetzt werden. Nachdem die Umsetzung etwas abgeklungen ist und dann noch 15 Minuten gerührt wurde, enthält das Reaktionsgemisch, bezogen auf den Siloxananteil, gemäß 1H-NMR-Analyse 40 Molprozent und nach 80 Minuten Rühren 70 Molprozent 1,1,3,3-Tetramethyl-1,3-dichlordisiloxan.

## Beispiel 5

Ein Gemisch aus 12,1 g Allylbromid, 14,8 g 1,1,1,3,3-Pentamethyldisiloxan und 200 Gewichts-ppm (bezogen auf das Gesamtgewicht des Disiloxans und des Allylhalogenids) Palladium in Form von Palladium auf Aktivkohle (5 Gewichtsprozent Palladium/ 95 Gewichtsprozent Aktivkohle) wird unter Rühren langsam auf 70°C erwärmt. Nachdem 2 Stunden bei 70°C gerührt wurde, enthält das Reaktionsgemisch, bezogen auf den Siloxananteil, gemäß 1H-NMR-Analyse 77 Molprozent 1,1,1,3,3-Pentamethyl-3-bromdisiloxan.

## Beispiel 6

Ein Gemisch aus 38,3 g Allyljodid, 14,8 g 1,1,1,3,3-Pentamethyldisiloxan und 200 Gewichts-ppm (bezogen auf das Gesamtgewicht des Disiloxans und des Allylhalogenids) Palladium in Form von Palladium auf Aktivkohle (5 Gewichtsprozent Palladium/ 95 Gewichtsprozent Aktivkohle) wird unter Rühren langsam auf 80°C erwärmt. Nachdem 2 Stunden bei 80°C gerührt wurde, enthält das Reaktionsgemisch, bezogen auf den Siloxananteil, gemäß 1H-NMR-Analyse 52 Molprozent 1,1,1,3,3-Pentamethyl-3-joddisiloxan.

## Beispiel 7

Zu einem auf 40°C erwärmten Gemisch aus 38,3 g Allylchlorid und 200 Gewichts-ppm (bezogen auf das Gesamtgewicht von Organopolysiloxan und Allylhalogenid) Palladium in Form von Palladium auf Aktivkohle (5 Gewichtsprozent Palladium/95 Gewichtsprozent Aktivkohle) werden unter Rühren tropfenweise 13,4 g durch Trimethylsiloxygruppen endblockiertes Mischpolymer aus 50 Molprozent Methylhydrogensiloxaneinheiten und 50 Molprozent Dimethylsiloxaneinheiten mit einer Viskosität von 250 mPa.s bei 25°C gegeben. Nach 3 Tagen Rühren bei 40°C sind 90 Molprozent des direkt an Silicium gebundenen Wasserstoffs durch direkt an Silicium gebundenes Chlor ersetzt.

## Beispiel 8

Ein Gemisch aus 13,4 g Tris-(trimethylsiloxy)-silan, 3,8 g Allylchlorid und 200 Gewichts-ppm (bezogen auf das Gesamtgewicht von Organosiliciumverbindung und Allylchlorid) Palladium in Form von Palladium auf Aktivkohle (5 Gewichtsprozent Palladium / 95 Gewichtsprozent Aktivkohle) wird zum Sieden unter Rückfluß (etwa 80°C) erwärmt. Nach 5 Stunden Sieden unter Rückfluß enthält das Reaktionsgemisch, bezogen auf den Siloxananteil, gemäß 1H-NMR-Analyse 30 Molprozent und nach 9 Stunden Sieden unter Rückfluß 90 Molprozent Tris-(trimethylsiloxy)-chlorsilan.

## Beispiel 9

Ein Gemisch aus 14,8 g 1,1,1,3,3-Pentamethyldisiloxan, 10,0 g Allylacetat (=Essigsäureallylester) und 0,01 g Palladium auf Aktivkohle (5 Gewichtsprozent Palladium / 95 Gewichtsprozent Aktivkohle), wobei sich die 0,01 g auf das Gesamtgewicht von Kohle und Palladium beziehen, wird 4 Stunden zum Sieden unter Rückfluß (etwa 105°C) erwärmt. Danach ist die Ausbeute an 1,1,1,3,3-Pentamethyl-3-acetoxydisiloxan quantitativ.

## Beispiel 10

Ein Gemisch aus 296 g Tris-(trimethylsiloxy)-silan, 110 g Allylacetat und 2,4 g Ruthenium auf Aktivkohle (5 Gewichtsprozent Ruthenium / 95 Gewichtsprozent Aktivkohle), wobei sich die 2,4 g auf das Gesamtgewicht von Kohle und Ruthenium beziehen, wird 4 Stunden zum Sieden unter Rückfluß (etwa 105°C) erwärmt. Danach ist die Ausbeute an Tris-(trimethylsiloxy)-acetoxysilan quantitativ.

## Beispiel 11

Ein Gemisch aus 51,2 g Allylacetat, 33,5 g 1,1,3,3,-Tetramethyl-disiloxan und 200 Gewichts-ppm Palladium (bezogen auf das Gesamtgewicht von Disiloxan und Allylacetat) in Form von Palladiumdiacetylacetonat wird unter Rühren langsam erwärmt. Bei 50°C setzt eine heftige Umsetzung ein, wobei die Temperatur auf etwa 105°C steigt. Nachdem die Umsetzung etwas abgeklungen ist, wird noch 15 Minuten gerührt. Das Reaktionsgemisch enthält dann gemäß $^1$H-NMR-Analyse 80 Molprozent (bezogen auf den Siloxananteil) 1,1,3,3-Tetramethyl-1,3-diacetoxydisiloxan.

Beispiel 12

Die in Beispiel 11 beschriebene Arbeitsweise wird wiederholt mit der Abänderung, daß die 200 Gewichts-ppm Palladium durch 200 Gewichts-ppm (bezogen auf das Gesamtgewicht von Disiloxan und Allylacetat Rhodium in Form des Komplexes der Formel [($C_6H_5$)$_3$ P]$_3$ RhCl ersetzt werden. Nachdem die Umsetzung etwas abgeklungen ist und dann noch 30 Minuten gerührt wurde, enthält das Reaktionsgemisch, bezogen auf den Siloxananteil, gemäß $^1$H-NMR-Analyse 70 Molprozent 1,1,3,3-Tetramethyl-1,3-diacetoxydisiloxan.

Beispiel 13

Die in Beispiel 11 beschriebene Arbeitsweise wird wiederholt mit der Abänderung, daß die 200 Gewichts-ppm Palladium durch 200 Gewichts-ppm (bezogen auf das Gesamtgewicht von Disiloxan und Allylacetat) Ruthenium in Form von Rutheniumtrisacetylacetonat ersetzt werden. Nachdem die Umsetzung etwas abgeklungen ist und dann noch 30 Minuten gerührt wurde, enthält das Reaktionsgemisch, bezogen auf den Siloxananteil, gemäß $^1$H-NMR-Analyse 50 Molprozent und nach 120 Minuten Rühren 85 Molprozent 1,1,3,3-Tetramethyl-1,3-diacetoxydisiloxan.

Beispiel 14

Zu einem auf 40°C erwärmten Gemisch aus 51,2g Allylacetat und 200 Gewichts-ppm (bezogen auf das Gesamtgewicht von Organopolysiloxan und Allylacetat) Palladium in Form von Palladium auf Aktivkohle (5 Gewichtsprozent Palladium / 95 Gewichtsprozent Aktivkohle) werden unter Rühren tropfenweise 13,4 g durch Trimethylsiloxygruppen endblockiertes Mischpolymer aus 50 Molprozent Methylhydrogensiloxaneinheiten und 50 Mol% Dimethylsiloxaneinheiten mit einer Viskosität von 250 mPa.s bei 25°C gegeben. Nach 3 Tagen Rühren bei 60°C sind 90 Molprozent des direkt an Silicium gebundenen Wasserstoffs durch Acetoxygruppen ersetzt.

Bei keinem der Beispiele 1 bis 14 ist im Reaktionsgemisch zusätzlich zu Organo(poly)siloxan mit direkt an Silicium gebundenem Halogen bzw. Acyloxysiloxan und nicht-umgesetztem Organo(poly)siloxan mit direkt an Silicium gebundenem Wasserstoff ein Anlagerungsprodukt von solchem Wasserstoff an Allylhalogenid bzw. Allylacetat zu beobachten.

Patentansprüche

1. Verfahren zur Herstellung von Acetoxysiloxanen oder Organo(poly)siloxanen mit an Silicium direkt gebundenem Halogen durch Umsetzung von direkt an Silicium gebundenen Wasserstoff aufweisendem Organo(poly)siloxan mit einer Allylverbindung in Gegenwart von metallischem Palladium, Ruthenium oder Rhodium oder von Acetylaceton- oder Phosphin-Komplex bzw. Acetylaceton- oder Phosphin-Verbindung eines der vorstehend genannten Edelmetalle,
**dadurch gekennzeichnet,**
daß als Allylverbindung ein Allylhalogenid mit 3 Kohlenstoffatomen je Molekül bzw. Allylacetat verwendet wird.

2. Verfahren nach Anspruch 1,
**dadurch gekennzeichnet,**
daß als Allylhalogenid Allylchlorid, Allylbromid oder Allyljodid verwendet wird.

**Claims**

1. Process for the preparation of acetoxysiloxanes or organo(poly)siloxanes containing halogen bonded directly to silicon by reacting an organo(poly)siloxane containing hydrogen bonded directly to silicon with an allyl compound in the presence of metallic palladium, ruthenium or rhodium or in the presence of an acetylacetone or phosphorine complex or an acetylacetone or phosphine compound of one of the abovementioned noble metals, characterized in that the allyl compound used is an allyl halide having 3 carbon atoms per molecule or allyl acetate.

2. Process according to Claim 1, characterized in that the allyl halide used is allyl chloride, allyl bromide or allyl iodide.

**Revendications**

1. Procédé pour préparer des acétoxy-siloxanes ou des (poly)organosiloxanes porteurs d'un halogène directement lié à du silicium, par réaction d'un (poly)organosiloxane porteur d'un hydrogène directement lié à du silicium avec un composé allylique en présence de palladium, de ruthénium ou de rhodium métallique ou d'un complexe de l'acétyl-acétone ou d'une phosphine ou d'un composé de l'acétyl-acétone ou d'une phosphine dérivant d'un des métaux nobles mentionnés ci-dessus, procédé caractérisé en ce qu'on utilise, comme composé allylique, un halogénure d'allyle contenant trois atomes de carbone par molécule ou l'acétate d'allyle.

2. Procédé selon la revendication 1, caractérisé en ce qu'on utilise, comme halogénure d'allyle, le chlorure d'allyle, le bromure d'allyle ou l'iodure d'allyle.